# EUROPEAN PATENT APPLICATION

(11) **EP 0 860 486 A1**
(43) Date of publication of application: **26.08.1998**
(21) Application number: 97850027.0
(22) Date of filing: 20.02.1997
(51) Int. Cl.: C09D 175/04, C08G 18/32, C08G 18/66

(54) **Composition for coating, sealing and protection purposes**

(71) Applicant: Procoat Aktiebolag, 194 54 Upplands Väsby (SE)
(72) Inventor: Nygren, Sune, 17140 Solna (SE)
(74) Representative: Roth, Ernst Adolf Michael

(57) **Abstract**

The present invention relates to a composition for coating, filling, sealing, and protection comprising an isocyanate curable polymer, a polymer curable isocyanate, an aliphatic polyether glycol, and rubber, wherein it further comprises a cycloaliphatic amine to improve non-running properties by proving an active thixotropy.

## Description

### Technical field

The present invention relates to a composition for coating, sealing and protection purposes comprising an isocyanate curable polymer, a polymer curable isocyante, an aliphatic polyether glycol and rubber.

The basic object of the composition of the present invention is to obtain a composition, which can be used as a coating of surfaces, which are subject to corrosion, and mechanical attacks; as a sealing agent for water and other liquids at tube joints, roffing, point-sealing of ceramic tiles, metal sheets, and the like, and which composition is very resistant to mechanical wear and attacks by chemicals including water.

The object of the present invention is to obtain a fast prepolymerization of part of the isocyanate in order to avoid dripping and running of a sprayed or otherwise applied composition.

A further object of the invention is to obtain non-settling properties of the composition, as it contains rubber particles which tend to settle upon storage.

A still further object is to obtain a non-moisture sensitive composition which allows application of the composition under moist conditions.

SE-A-7709649-3 describes a corrosion resistant coating composition, particularly for external rust protection of vehicle chassies, which composition consists of a polyurethan polymer, waste rubber, water free black coal tar, zeolitic drying agent. This composition fulfills generally its object, but has some disadvantages by strongly smelling of black coal tar, which prevents it from being used in more restricted spaces, and leads to that well ventilated spaces are required at the application, as well. Further, the black coal tar leads to the fact that the coating obtains a black colour, which often may not be of no importance, but as often is not acceptable, but one demands instead a pigmented product with a colour pigment by choice. Besides these drawbacks, which is of a certain cosmetic nature, one often requires a still higher wearing resistance, resistance against attack by chemicals, particularly in alkaline environment, and temperature stability.

The above problems are solved by a composition which contains rubber with a particle size of at most 0,4 mm, and present in an amount of at most 50 % by weight, and an isocyanate curable polymer base of the polyhydroxy type in an amount of 40-55 % by weight, a polymer curing isocyanate in an amount of 18-30 % by weight, and an aliphatic polyether glycol in an amount of 1 to 5 % by weight.

Further characteristics are evident from the accompanying claims.

The curable prepolymer is preferably an isocyanate curable polyurethan (DESMODUR-hardener; DESMOPHEN 1150-prepolymer) but also isocyanate curable epoxy polymers can be used.

Suitable binding agent of polymer type which are curable by isocyanate active hardeners are different polyols, polyester bases, having a molecular weight of 200 and more. Other polymer materials are epoxy resins which are primarily dissolved in a keton, or a glycol ether, and are then cured using an isocyanate active hardener (e.g. DESMODUR) or amino group active hardener. Suitable epoxy resins have a molecular weight of 1000 or more.

The aliphatic polyether glycols used can either be a polyester, such as DESMOPHEN 1150, or the like, and/or an aliphatic glycol, or more simple, such as ethylene glycol, diethylene glycol, triethylene glycol.

All types of rubber can be used as a rubber material, such as waste rubber, waste rubber tires, raw rubber, and other rubber qualities.

Thus it has turned out that 20-40 % by weight of rubber powder, suitably waste rubber, having a particle size of <0,4 mm, preferably 0.05-0.2 mm, 40-50 % by weight of a polymer base, 1-5 % by weight of an aliphatic polyether glycol base, and 18-25 % by weight of an isocyanate hardener give excellent products within the scope of the present invention. Thus these compositions have, in cured state, a very high elasticity, and wearing resistance. In the case the polyester base contains moisture a zeolite drying agent should be added, alternatively active aluminium oxide, or basic aluminium silicates.

The object of the present invention is achieved by adding a cycloaliphatic amine in an amount of 0.1 to 1.0 % by weight of the total composition.

Hereby a rapid prepolymerization is obtained within seconds after application of the total composition to a surface, thereby eliminating running and dripping of the composition from the surface treated.

In a prefferred embodiment the cycloaliphatic amine consists of 3,3-dimethyl-4,4-diaminodicyclohexyl methane present in an amount of 0.1 to 1.0 % by weight of the total composition, preferable in an amount of 0.3 to 0.7 % by weight.

The cycloaliphatic amine reacts with part of the isocyanate present and provides a rapid increase of the viscosity, before the isocyanate and the isocyanate curable polymer react to form the final coating.

In order to achieve non-settling properties of the composition stored the composition may further be made thixotropic by the addition of a soya bean derivatitive. The soya derivative is present in an amount of about 0.5 % by weight of the total composition.

In a further object of the present invention the composition is made non-moisture sensitive, the isocyanate-polyurethane system being sensitive to moisture, by the addition of a water absorbing agent such as an aluminum silicate, a zeolite, whereby the composition can be applies even in moist areas without risk of foaming, the water absorbing material is added, when desired, in an amount of 5-10 % by weight depending upon the moist conditions, such as present in a concrete mass when sealing e.g. road and bridge constructions.

### EXAMPLE 1

40 parts per weight of waste rubber having a particle size of 0.1 to 0.2 mm were intimately mixed with a mixture of 39.5 parts per weight of DESMOPHEN 1150, and 2 parts per weight of polyether glycol (triethylene glycol) as well as 0.5 parts per weight of 3,3-dimethyl-4,4-diaminodicyclohexyl methane. To this mixture 18 parts per weight of an isocyanate active hartener (DESMODUR) were added for the curing of the polymer at the application of the total composition to an object, such as surface of concrete or metal.

A product of Example 1 above (A) was tested and compared with a product (B) of SE-A-7709649-3, the Example, with regard to wearing resistance, heat resistance, adherence to steel, and chemical resistance.

### Wearing resistance

Plates with applies coatings of above were handled in a tumbler for 5 days (120 hrs) together with 200 g of stones. The volume of material having been worn off, given in mm³, was then measured.
A= 19 mm³
B=105 mm³

Cylindrical test bodies of the respective product were forced over an emery-cloth having 60 particles per cm² with a pressure of 5 N, and length of 20 m, whereupon the volume worn off was determined.
A=145 mm³
B=470 mm³

### Heat resistance

Plates with applied coating were hanged vertically for 2 days (48 hrs) at different temperatures, the samples/plates were then acclimatized to ambient temperature (20° C), whereupon they were checked ocularly.
A= withstand 150° C
B= withstand 80° C

### Adherence to steel

Coatings on steel were tested for traction for determining the adherence ability.
A= withstand 4.0 Mpa prior to burst
B= withstand 0.8 Mpa prior to burst

### Chemical resistance

Test coatings of the respective products were subjected to different oils, whereby one could generally determine that sample B miscoloured all such liqiuds, while sample A did not give any miscolouration. At testing in acidic aquoes environment (HCL 30%; HNO₃ 10%; H₂SO₄ 10%; or CH₃COOH 50%) the resistance is just about the same. In an alkaline aqueous environment (NaOH or NH₄ OH) sample A is better.

The water vapour permeablility is less for sample A than it is for sample B.

### Application

Sample A can be applied in thicker layers (2.5-3 mm) on vertically hanging testing plates compared with sample B which allows 1.5 mm, only.

### Running

The composition of the invention was applied onto vertically hanging metal sheets in a layer having a thickness of 1.5 mm and was compared with a composition (B) being applies with the same layer thickness, 1.5 mm. The running of the two compositions was determined by simply measuring the movement of the lower edge of the applies area.
A= 0.5 mm
B= 10 mm

Thus the addition of the cycloaliphatic amine improved the nonrunning properties considerably.

In connection with the preparation of the present composition one should preferably put the product under vacuum, whereby, in particular, the wearing resistance, and the chemical resistance are further improved. Furthermore, the aging resistance, moisture resistance, and the traction strength are improved. The pressure in the vacuum step for elimination of air should be 0.8 bar, but can in case of very high viscous compositions be further reduced down to 0.5-0.6 bar.

Application of the composition can be effected in different ways, such as by means of simple manual painting, by mechanical painting, as well as by means of high pressure spraying. At high pressure spraying a modified conventional high pressure spraying apparatus of two-component type is suitably used, wherein the composition, exclusive of hardener, and hardener are brought together prior to the outlet of a mixing tube (mixer) and is brought forward to a spraying gun via a heat taped high pressure hose. The pressure on the composition shall be so high that a well distributed spraying mass is obtained (atomized), which, at viscosities of the composition normally appearing, is obtained at 160-200 kg/cm² and a temperature of >40° C, preferably 40-80° C, more preferably 45-60° C.

Normally the viscosity of the composition is such that the high pressure pump as such does not manage to draw the composition into the apparatus as normal temperature. Thus, a pressure plate has been arranged to the high pressure spray apparatus, with success, which plate fits snuggly into the vessel where the composition is prepared, whereupon the pressure plate is pressed down into the preparation vessel either mechanically, pneumatically, or hydraulically, so that the composition is pressed up into the high pressure spray apparatus.

In order to increase the curing of the composition above an accelerator of the curing reaction can be added in an amount of 0.1-0.5 % by weight. Exemples of such accelerators are dibutyl distannium dilaurate, or corresponding lead compounds.

In order to reduce the fire risk a flame retarder can be added to the composition such as a phosphite compound, which is added in an amount of 5-15 % by weight. Nowgard V-4 is an example of a retarder.

The composition can be made thixotropic as well, by adding a suitable jelling substance.

## Claims

1. Composition for coating, filling, sealing, and protection comprising an isocyanate curable polymer, a polymer curable isocyanate, an aliphatic polyether glycol, and rubber, **characterized** in that it furter comprises a cycloaliphatic amine to improve non-running propertis by providing an active thixotropy.

2. Composition according to claim 1, **characterized** in that it contains 3,3-dimethyl-4,4-diaminodicyclohexyl methane or a derivative thereof.

3. Compostion according to claims 1 to 2, **characterized** in that it further comprises a soya bean derivative to impart nonsettling properties in a storage.

4. Compostion according to one or more of the preceeding claims, characterized in that it further contains an aluminium silicate to provide non-moisture sensitivity to the composition.
